# DEMANDE DE BREVET EUROPEEN

(11) **EP 2 072 969 A1**
(43) Date de publication de la demande: **24.06.2009**
(21) Numéro de dépôt: 08171253.1
(22) Date de dépôt: 10.12.2008
(51) Int. Cl.: G01D 11/24, F15B 15/28, G01D 5/12, B60T 17/22

(54) **Capteur linéaire avec renvoi d'angle et déplacement à câble**

(30) Priorité: 21.12.2007 FR 0709131
(71) Demandeur: Robert Bosch GmbH, 70442 Stuttgart (DE)
(72) Inventeur: Cagnac, Bastien, 60660, Cramoisy (FR); Fourcade, Jean, 77420, CHAMPS SUR MARNE (FR)
(74) Mandataire: Hurwic, Aleksander Wiktor

(57) **Abrégé**

Le capteur linéaire **1** destiné à mesurer une course axiale L₀ d'une pièce **2** coulissant selon une direction axiale **20** dans un bâti **3** comprend une partie mobile **4** coopérant avec une partie fixe **5,** ladite partie mobile **4** comprenant :
- un élément longitudinal **40** coopérant à une extrémité **400** avec ladite pièce **2,** toute translation de ladite pièce **2** selon ladite course axiale entraînant un déplacement corrélatif de son autre extrémité **401,**
- une source **41** de champ magnétique solidaire de l'extrémité **401,** ladite partie fixe **5** comprenant un moyen de réception **50** dudit champ magnétique.

Il est caractérisé en ce que ladite partie fixe **5** comprend un moyen de renvoi d'angle **53** coopérant avec ledit élément longitudinal **40** et transformant ainsi ladite course axiale de l'extrémité **400** en une course radiale de l'autre extrémité **401.**

Avantages : le capteur **1** présente un faible encombrement axial.

## Description

### Domaine de l'invention

L'invention concerne le domaine des capteurs de déplacement, et plus précisément les capteurs de déplacement utilisés dans des dispositifs ou équipements de véhicules automobiles, par exemple dans des dispositifs de freinage ou des dispositifs de freinage assisté.

### Etat de la technique

Les capteurs de déplacement sont déjà bien connus dans leur principe.
Ces capteurs linéaires, destinés à mesurer une course axiale d'une pièce coulissant selon une direction axiale dans un bâti, comprennent une partie dite mobile coopérant avec une partie dite fixe.
Ladite partie mobile du capteur comprend :
- un élément longitudinal coopérant avec ladite pièce de manière à ce que toute translation de ladite pièce entraîne une translation axiale de ladite partie mobile,
- une source de champ magnétique solidaire dudit élément longitudinal à son extrémité de manière à ce que tout déplacement de ladite extrémité haute entraîne celui de ladite source.
   Ladite partie fixe comprenant un moyen de réception dudit champ magnétique disposé en regard de ladite source et apte à envoyer un signal dit primaire fonction de la course axiale de ladite pièce, vers un transducteur apte à convertir ledit signal primaire en un signal électrique transmis à un connecteur permettant de transférer ledit signal électrique vers un circuit électrique extérieur.

### Problèmes posés

Les capteurs de déplacement de l'état de la technique présentent des problèmes de plusieurs ordres :
- d'abord, ils peuvent présenter un problème d'encombrement dans la mesure où ils doivent être implantés dans un espace relativement réduit, en particulier selon ladite direction axiale correspondant à la direction de déplacement de la pièce mobile coulissant dans le bâti fixe,
- en outre, ils peuvent présenter des problèmes de fiabilité et/ou d'étalonnage,
- enfin, ils peuvent présenter des difficultés de montage, compte tenu notamment de l'accès encombré à ladite pièce mobile.
   Plus particulièrement, ces problèmes se posent avec encore plus d'acuité quand ces capteurs doivent être implantés sur des dispositifs de freinage ou des dispositifs de freinage assisté.

### Objet de l'invention

Un premier objet de l'invention est constitué par un capteur linéaire permettant de résoudre les problèmes posés.
Un second objet de l'invention est constitué par l'utilisation d'un tel capteur dans des dispositifs ou équipements de véhicules automobiles, par exemple dans des dispositifs de freinage ou des dispositifs de freinage assisté.

### Description de l'invention

Selon l'invention, le capteur linéaire destiné à mesurer une course axiale L₀ d'une pièce coulissant selon une direction axiale dans un bâti à paroi transversale perpendiculaire à ladite direction axiale, comprenant une partie dite mobile coopérant avec une partie dite fixe, ladite partie mobile comprenant :
- un élément longitudinal coopérant, à son extrémité dite basse, avec ladite pièce grâce à un premier moyen de liaison, de manière à ce que ladite extrémité basse soit mobile selon une course axiale reproduisant celle de ladite pièce mobile, toute translation de ladite pièce entraînant une translation axiale de ladite extrémité basse, un déplacement dudit élément longitudinal avec un déplacement corrélatif de son extrémité dite haute,
- une source de champ magnétique solidaire dudit élément longitudinal à son extrémité haute, grâce à un dit second moyen de liaison, de manière à ce que tout déplacement de ladite extrémité haute entraîne celui de ladite source, ladite partie fixe comprenant un moyen de réception dudit champ magnétique en regard de ladite source et apte à envoyer un signal dit primaire fonction de ladite course axiale, vers un transducteur apte à convertir ledit signal primaire en signal électrique S transmis à un connecteur permettant de transférer ledit signal électrique S vers un circuit électrique extérieur.
   Il est caractérisé en ce que ladite partie fixe comprend un moyen de renvoi d'angle coopérant avec ledit élément longitudinal grâce à une partie courbe et transformant ainsi ladite course axiale de ladite extrémité basse en une course radiale de ladite extrémité haute selon une direction dite radiale typiquement perpendiculaire à ladite direction axiale, de manière à ce que ledit capteur présente un faible encombrement axial typiquement inférieur à 3.L₀.

Les capteurs linéaires selon l'invention résolvent les problèmes posés. En effet :
- d'une part, ils présentent un encombrement axial très réduit, au point de ne pas, éventuellement, nécessiter par eux-mêmes, d'espacement axial propre,
- d'autre part, ils peuvent être testés et étalonnés avant d'être implantés à la jonction dudit bâti et de ladite pièce mobile coulissant dans ledit bâti fixe,
- enfin, leur encombrement, essentiellement radial, facilite leur montage à la jonction dudit bâti et de ladite pièce mobile.

### Description des figures

Les figures 1 à 3 sont des vues en perspective relatives à l'invention.
La figure **4** comporte deux vues en coupe 4a et 4b.

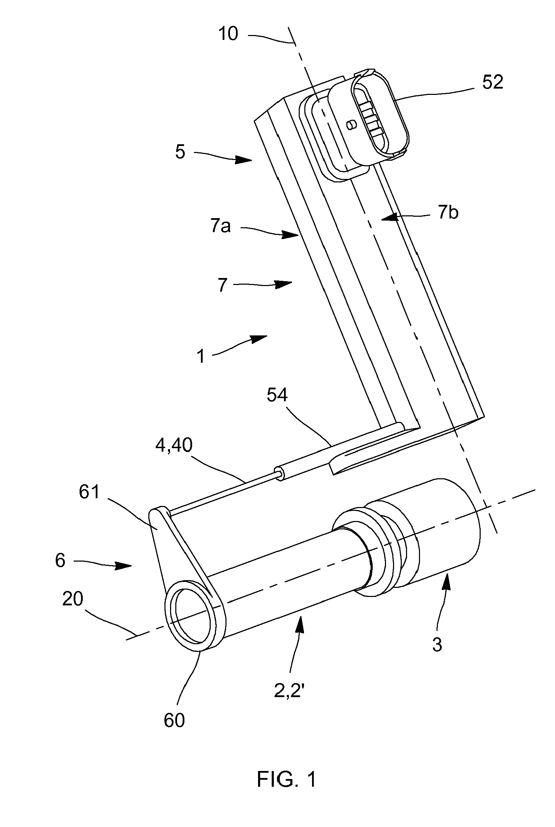

La figure **1** représente le capteur linéaire **1** comprenant une partie fixe **5** et une partie mobile **4** solidarisée à un piston **2'** formant ladite pièce mobile **2.**

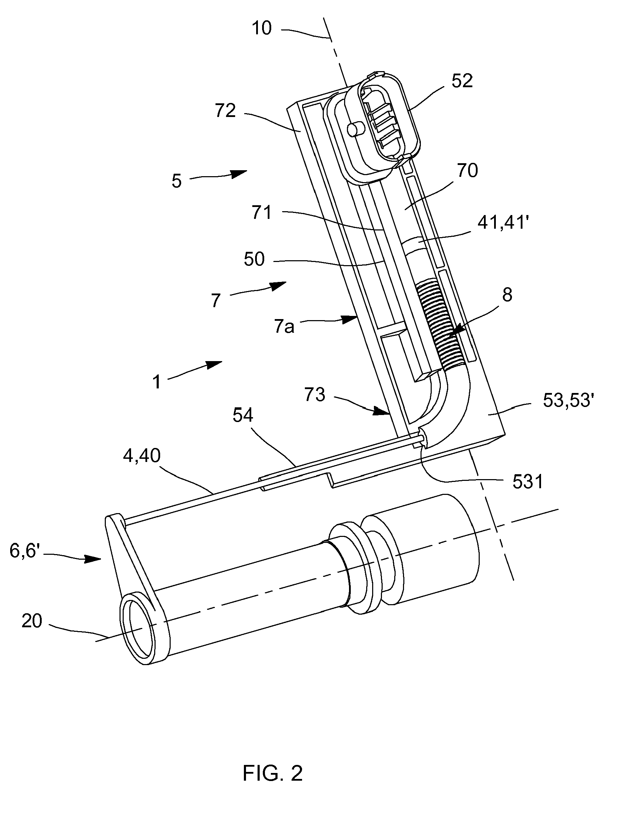

Sur la figure **2****,** analogue à la figure 1, ladite partie fixe **5** a été représentée après avoir enlevé le couvercle **7b** du boîtier rigide **7** logeant notamment la source **41** du champ magnétique et ledit moyen de réception **50** du champ magnétique.

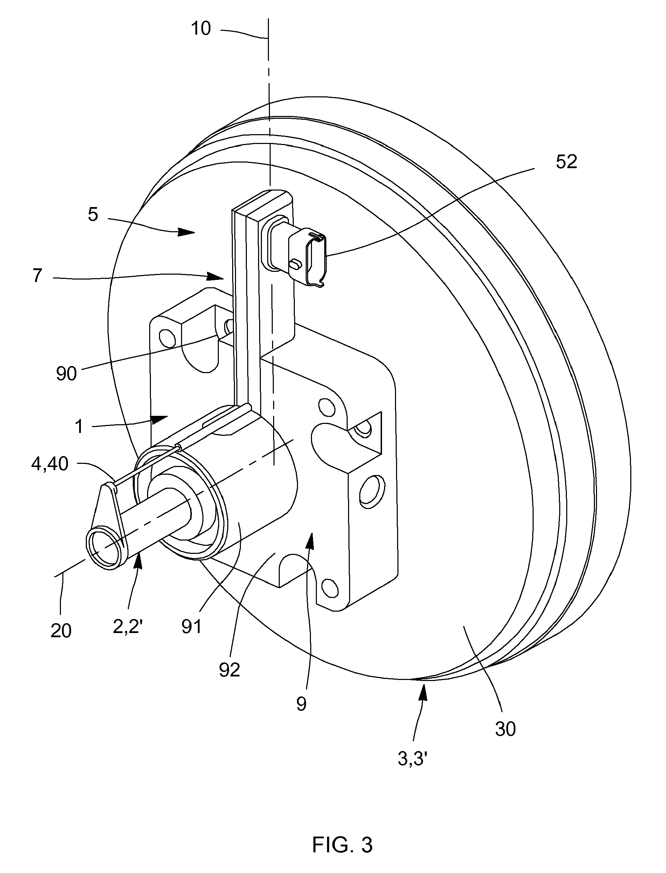

La figure 3 représente le capteur linéaire **1,** sa partie fixe **5** étant solidarisée à un servo-moteur pneumatique **3'** formant ledit bâti **3,** sa partie mobile **4** étant solidarisée à un piston **2'** formant ladite pièce mobile **2.**

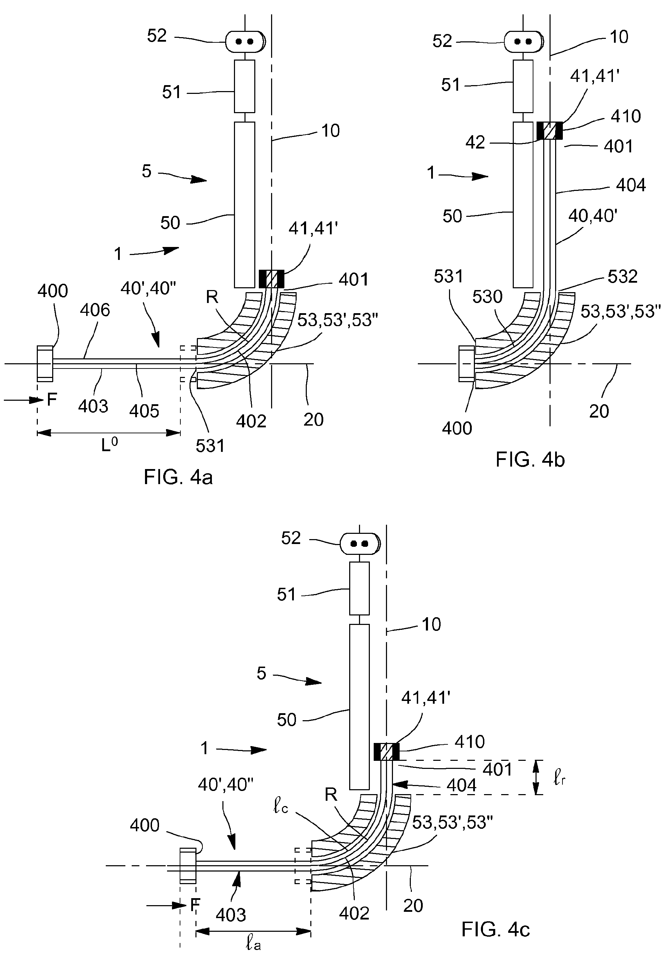

Les figures 4a et **4b** représentent schématiquement les principaux éléments fonctionnels dudit capteur linéaire **1** selon les deux postions extrêmes des dites extrémités basse **400** et haute **401** dudit élément longitudinal flexible **40',** la figure 4c représentant une position intermédiaire. Sur la figure **4a****,** ladite extrémité basse **400** est écartée au maximum de ladite direction radiale **10,** alors que, sur la figure 4b, ladite extrémité basse **400** est rapprochée au maximum de ladite direction radiale **10.**

### Description détaillée de l'invention

Dans un mode de réalisation avantageux, ledit élément longitudinal **40** est un élément longitudinal flexible **40',** par exemple un câble, ledit élément longitudinal flexible **40'** s'étendant sans discontinuité de ladite extrémité basse **400** à ladite extrémité haute **401** sur une longueur curviligne l > L₀.
Ainsi, tout déplacement axial de ladite extrémité basse **400** dudit élément longitudinal flexible **40'** entraîne un déplacement radial correspondant de son extrémité dite haute **401.**

Comme illustré sur les figures 1 à 3, ledit moyen de renvoi d'angle **53** est un renvoi d'angle à 90° **53'** comprenant une cavité, par exemple une cavité tubulaire **530** de rayon de courbure moyen R, formant un élément de guidage coudé à 90° pour ladite partie courbe **402** dudit élément longitudinal flexible **40',** ladite cavité tubulaire **530** présentant un orifice bas dit axial **531** et un orifice haut dit radial **532.**

Comme illustré sur les figures 4a, 4b et 4c, ledit élément longitudinal flexible **40'** présente une longueur curviligne l au moins égale à la somme L₀ + l_{C}, la longueur l_{c} valant 0,5.n.R correspondant à la longueur de ladite partie courbe **402** dudit élément longitudinal **40'** toujours présente dans ledit renvoi d'angle **53',** ladite longueur curviligne l étant égale à la somme l_{A} + l_{C} + l_{R} avec l_{A} et l_{R} désignant respectivement les longueurs des parties axiale **403** et radiale **404** dudit élément longitudinal flexible **40',** comme illustré sur la figure **4c****.**

Selon l'invention, ledit élément longitudinal flexible **40'** présente une résistance à la flexion supérieure à une force F nécessaire pour effectuer ledit déplacement dudit élément longitudinal **40',** ladite force F étant la force de compression exercée sur ladite extrémité basse **400** dudit élément longitudinal flexible **40'** en vue de son déplacement dans un sens dit « aller », comme illustré sur la figure 4a, de manière à ce qu'il n'y ait pas de flambage de la partie axiale **403** ou de la partie radiale **404** qui pourrait fausser la fiabilité ou la précision de la mesure de ladite course axiale.

Avantageusement, et comme illustré sur les figures 4a et 4b, ledit élément longitudinal flexible **40'** est un élément longitudinal composite **40"** comprenant une âme centrale **405** formant, de préférence, un câble métallique, et une gaine ou peau extérieure **406** apte à réduire le frottement entre ledit élément longitudinal flexible **40'** et notamment ledit moyen de renvoi d'angle **53, 53',** ladite gaine **406** étant, de préférence, une gaine en téflon.

Comme illustré sur les figures 1 à 3, ladite partie fixe **5** comprend avantageusement en outre un boîtier longitudinal **7,** de préférence un boîtier rigide, destiné à être fixé audit bâti **3** et de préférence à ladite paroi transversale **30** dudit bâti **3,** ledit boîtier **7** comprenant au moins deux parties longitudinales parallèles formant par exemple des cavités longitudinales parallèles, une dite première partie ou cavité **70** dudit boîtier **7** logeant ladite partie radiale **404** dudit élément longitudinal flexible **40'** et ladite source **41,** et formant un moyen de guidage radial pour ladite source **41,** une dite seconde partie ou cavité **71** dudit boîtier (7) logeant ledit moyen de réception 50 et ledit transducteur **51,** ledit boîtier **7** comprenant à son extrémité dite supérieure **72** ledit connecteur, et à son extrémité dite inférieure **73** ledit moyen de renvoi d'angle **53, 53'.**

De préférence, ledit boîtier **7** est formé par coopération d'un fond **7a** et d'un couvercle **7b,** ledit fond **7a** et ledit couvercle **7b** étant des pièces moulées en matière plastique de manière à former lesdites cavités **70, 71,** ledit moyen de renvoi d'angle **53, 53'** et, éventuellement, la partie en matière plastique dudit connecteur **52,** ledit couvercle **7b** et ledit fond **7a** coopérant par soudure ou par encliquetage, de préférence irréversible, d'éléments mâle et femelle en regard.

Comme illustré sur la figure **2****,** ledit orifice axial **531** dudit renvoi d'angle **53'** débouche sur un élément tubulaire axial **54** formant un moyen de guidage axial d'une fraction de ladite partie axiale **403** dudit élément longitudinal flexible **40',** ledit élément tubulaire axial **54** faisant, de préférence, une pièce monobloc avec ledit boîtier **7.**

Selon l'invention, ladite source **41** est un aimant permanent **41',** ledit aimant permanent **41'** comprenant de préférence, au moins sur une partie de sa hauteur, un revêtement latéral **410** apte à faciliter son glissement dans ladite première cavité **70,** ledit revêtement latéral **410** étant par exemple un revêtement en téflon.

Comme illustré sur la figure 2, ledit capteur 1 comprend un ressort de rappel **8** logé dans ladite première cavité **70,** coopérant avec ladite source **41** ou avec ladite partie radiale **404** dudit élément longitudinal flexible **40',** ledit ressort **8** exerçant une force F' antagoniste à ladite force F, de manière à ce que, lorsque ledit premier moyen de liaison 6 forme un poussoir **6'** solidaire de ladite pièce **2,** ledit poussoir **6'** comprenant une bague **60** de fixation à ladite pièce **2** et une projection radiale **61** poussant l'extrémité basse **400** dudit élément longitudinal flexible **40'** selon ledit mouvement « aller » de ladite pièce en exerçant ladite force F de compression, ladite extrémité basse **400** dudit élément longitudinal flexible **40'** reste en contact avec ladite projection radiale **61** lors du mouvement dit « retour » de ladite pièce **2.**

Comme illustré sur les figures 4a et 4b, ledit moyen de renvoi d'angle **53** comprend un manchon **53"** formant un quart de tore de 90°, ledit manchon **53"** coopérant avec une cavité correspondante dudit boîtier 7, ledit manchon **53"** comprenant ladite cavité tubulaire **530,** ledit manchon **53"** formant éventuellement une butée pour ledit ressort de rappel **8.**

Selon l'invention, ledit signal primaire relatif à une position donnée de ladite source **41** mobile par rapport audit moyen de réception **50** fixe, correspond à une mesure d'une grandeur électrique d'un circuit choisie parmi : résistance, capacité, impédance.
Ledit signal électrique S est un signal linéaire S_{L}, ledit signal linéaire S_{L} étant éventuellement obtenu par traitement dudit signal électrique S grâce à un moyen électronique ou grâce à un étalonnage, de manière à ce que le rapport ΔS_{L}/ΔL soit constant pour toute variation ΔS_{L} du signal S résultant d'une variation ΔL de ladite course de ladite pièce.

Comme illustré sur la figure **3****,** ladite partie fixe **5** dudit capteur **1** est solidarisée audit bâti **3** grâce à un support intermédiaire **9.** Ledit support 9 comprend une partie axiale **91** et une partie radiale **92** assemblée à ladite paroi transversale **30** par une pluralité de moyens de fixation **90.**

Un autre objet de l'invention est constitué par l'utilisation d'un capteur selon l'invention dans des dispositifs ou équipements de véhicules automobiles, par exemple dans des dispositifs de freinage ou des dispositifs de freinage assisté.
Dans une utilisation particulièrement intéressante, ladite pièce **2** est un piston **2'** et ledit bâti **3** est un maître-cylindre et/ou un servomoteur pneumatique d'assistance au freinage **3',** de manière à détecter le déplacement axial dudit piston **2'** dans ledit maître-cylindre et/ou dans ledit servomoteur **3'.**

### Exemples de réalisation

Les figures 1 à 4b constituent des exemples de réalisation de capteurs linéaires **1** selon l'invention.
La figure 3 illustre en outre l'utilisation de tels capteurs dans un dispositif de freinage.

### Avantages de l'invention

Le dispositif selon l'invention possède de nombreux avantages. Il peut être implanté avec un encombrement réduit. Il peut être testé individuellement avant d'être assemblé à un ensemble comprenant ledit bâti **3** et ladite pièce mobile **2.**

### Liste des repères

Capteur linéaire ......... 1
Direction radiale ....... 10
Pièce mobile ............ 2
Piston ............... 2'
Direction axiale ....... 20
Bâti ............... 3
Servomoteur ou Maître-cylindre... 3'
Paroi transversale ...... 30
Partie mobile de 1 ........ 4
Elément longitudinal ..... 40
Elément longitudinal flexible. 40'
Elément composite ...... 40"
Extrémité basse ..... 400
Extrémité haute ..... 401
Partie courbe de 40 ... 402
Partie axiale de 40 ... 403
Partie radiale de 40 .. 404
Ame centrale ...... 405
Gaine extérieure .... 406
Source de champ magnétique ... 41
Aimant permanent ....... 41'
Revêtement latéral .... 410
Second moyen de liaison .... 42
Partie fixe de 1 ......... 5
Moyen de réception ...... 50
Transducteur ........ 51
Connecteur .......... 52
Moyen de renvoi d'angle .... 53
Renvoi d'angle à 90° ..... 53'
Manchon formant 53 ...... 53"
Cavité tubulaire ...... 530
Orifice bas axial...... 531
Orifice haut radial..... 532
Elément tubulaire axial .... 54
Premier moyen de liaison ..... 6
Poussoir .............. 6'
Bague de fixation à 2 .... 60
Projection radiale ..... 61
Boîtier rigide de 1 ......... 7
Fond de 7 ............. 7a
Couvercle ............. 7b
Première partie ou cavité ... 70
Seconde partie ou cavité ... 71
Extrémité supérieure ..... 72
Extrémité inférieure ..... 73
Ressort de rappel ......... 8
Support de 1 ........... 9
Moyen de fixation à 3, 30 ... 90
Partie axiale .......... 91
Partie radiale ......... 92

## Revendications

1. Capteur linéaire (1) destiné à mesurer une course axiale L₀ d'une pièce (2) coulissant selon une direction axiale (20) dans un bâti (3) à paroi transversale (30) perpendiculaire à ladite direction axiale (20), comprenant une partie dite mobile (4) coopérant avec une partie dite fixe (5), ladite partie mobile (4) comprenant:
- un élément longitudinal (40) coopérant, à son extrémité dite basse (400), avec ladite pièce (2) grâce à un premier moyen de liaison (6), de manière à ce que ladite extrémité basse (400) soit mobile selon une course axiale reproduisant celle de ladite pièce mobile (2), toute translation de ladite pièce (2) entraînant une translation axiale de ladite extrémité basse (400), un déplacement dudit élément longitudinal (40) avec un déplacement corrélatif de son extrémité dite haute (401),
- une source (41) de champ magnétique solidaire dudit élément longitudinal (40) à son extrémité haute (401), grâce à un dit second moyen de liaison (42), de manière à ce que tout déplacement de ladite extrémité haute (401) entraîne celui de ladite source (41), ladite partie fixe (5) comprenant un moyen de réception (50) dudit champ magnétique en regard de ladite source (41) et apte à envoyer un signal dit primaire fonction de ladite course axiale, vers un transducteur (51) apte à convertir ledit signal primaire en signal électrique S transmis à un connecteur (52) permettant de transférer ledit signal électrique S vers un circuit électrique extérieur,
et **caractérisé en ce que** ladite partie fixe (5) comprend un moyen de renvoi d'angle (53) coopérant avec ledit élément longitudinal (40) grâce à une partie courbe (402) et transformant ainsi ladite course axiale de ladite extrémité basse (400) en une course radiale de ladite extrémité haute (401) selon une direction dite radiale (10) typiquement perpendiculaire à ladite direction axiale (20), de manière à ce que ledit capteur (1) présente un faible encombrement axial typiquement inférieur à 3.L₀.

2. Capteur selon la revendication 1 dans lequel ledit élément longitudinal (40) est un élément longitudinal flexible (40'), par exemple un câble, ledit élément longitudinal flexible (40') s'étendant sans discontinuité de ladite extrémité basse (400) à ladite extrémité haute (401) sur une longueur curviligne l > L₀.

3. Capteur selon la revendication 2 dans lequel ledit moyen de renvoi d'angle (53) est un renvoi d'angle à 90° (53') comprenant une cavité, par exemple une cavité tubulaire (530) de rayon de courbure moyen R, formant un élément de guidage coudé à 90° pour ladite partie courbe (402) dudit élément longitudinal flexible (40'), ladite cavité tubulaire (530) présentant un orifice bas dit axial (531) et un orifice haut dit radial (532).

4. Capteur selon la revendication 3 dans lequel ledit élément longitudinal flexible (40') présente une longueur curviligne l au moins égale à la somme L₀ + l_{c}, la longueur l_{c} valant 0,5.π.R correspondant à la longueur de ladite partie courbe (402) dudit élément longitudinal (40') toujours présente dans ledit renvoi d'angle (53'), ladite longueur curviligne l étant égale à la somme l_{A} + l_{c} + l_{R} avec l_{A} et l_{R} désignant respectivement les longueurs des parties axiale (403) et radiale (404) dudit élément longitudinal flexible (40').

5. Capteur selon une quelconque des revendications 2 à 4 dans lequel ledit élément longitudinal flexible (40') présente une résistance à la flexion supérieure à une force F nécessaire effectuer ledit déplacement dudit élément longitudinal flexible (40'), ladite force F étant la force de compression exercée sur ladite extrémité basse (400) dudit élément longitudinal flexible (40') en vue de son déplacement dans un sens dit « aller ».

6. Capteur selon une quelconque des revendications 2 à 5 dans lequel ledit élément longitudinal flexible (40') est un élément longitudinal composite (40") comprenant une âme centrale (405) formant, de préférence, un câble métallique, et une gaine ou peau extérieure (406) apte à réduire le frottement entre ledit élément longitudinal flexible (40') et notamment ledit moyen de renvoi d'angle (53, 53'), ladite gaine (406) étant, de préférence, une gaine en téflon.

7. Capteur selon une quelconque des revendications 1 à 6 dans lequel ladite partie fixe (5) comprend en outre un boîtier longitudinal (7), de préférence un boîtier rigide, destiné à être fixé audit bâti (3) et de préférence à ladite paroi transversale (30) dudit bâti (3), ledit boîtier (7) comprenant au moins deux parties longitudinales parallèles formant par exemple des cavités longitudinales parallèles, une dite première partie ou cavité (70) dudit boîtier (7) logeant ladite partie radiale (404) dudit élément longitudinal flexible (40') et ladite source (41), et formant un moyen de guidage radial pour ladite source mobile (41), une dite seconde partie ou cavité (71) dudit boîtier (7) logeant ledit moyen de réception (50) et ledit transducteur (51), ledit boîtier (7) comprenant à son extrémité dite supérieure (72) ledit connecteur, et à son extrémité dite inférieure (73) ledit moyen de renvoi d'angle (53, 53').

8. Capteur selon la revendication 7 dans lequel ledit boîtier (7) est formé par coopération d'un fond (7a) et d'un couvercle (7b), ledit fond (7a) et ledit couvercle (7b) étant des pièces moulées en matière plastique de manière à former lesdites cavités (70, 71), ledit moyen de renvoi d'angle (53, 53') et la partie en matière plastique dudit connecteur (52), ledit couvercle (7b) et ledit fond (7a) coopérant par soudure ou par encliquetage, de préférence irréversible, d'éléments mâle et femelle en regard.

9. Capteur selon une quelconque des revendications 3 à 8 dans lequel ledit orifice axial (531) dudit renvoi d'angle (53') débouche sur un élément tubulaire axial (54) formant un moyen de guidage axial d'une fraction de ladite partie axiale (403) dudit élément longitudinal flexible (40'), ledit élément tubulaire axial (54) faisant, de préférence, une pièce monobloc avec ledit boîtier (7).

10. Capteur selon une quelconque des revendications 1 à 9 dans lequel ladite source (41) est un aimant permanent (41'), ledit aimant permanent (41') comprenant de préférence, au moins sur une partie de sa hauteur, un revêtement latéral (410) apte à faciliter son glissement dans ladite première cavité (70), ledit revêtement latéral (410) étant de préférence un revêtement en téflon.

11. Capteur selon une quelconque des revendications 1 à 10 comprenant un ressort de rappel (8) logé dans ladite première cavité (70), coopérant avec ladite source (41) ou avec ladite partie radiale (404) dudit élément longitudinal flexible (40'), ledit ressort (8) exerçant une force F' antagoniste à ladite force F, de manière à ce que, lorsque ledit premier moyen de liaison (6) forme un poussoir (6') solidaire de ladite pièce (2), ledit poussoir (6') comprenant une bague (60) de fixation à ladite pièce (2) et une projection radiale (61) poussant l'extrémité basse (400) dudit élément longitudinal flexible (40') selon ledit mouvement « aller » de ladite pièce en exerçant ladite force F de compression, ladite extrémité basse (400) dudit élément longitudinal flexible (40') reste en contact avec ladite projection radiale (61) lors du mouvement dit « retour » de ladite pièce (2).

12. Capteur selon une quelconque des revendications 1 à 11 dans lequel ledit moyen de renvoi d'angle (53) comprend un manchon (53") formant un quart de tore de 90°, ledit manchon (53") coopérant avec une cavité correspondante dudit boîtier (7), ledit manchon (53") comprenant ladite cavité tubulaire (530), ledit manchon (53") formant éventuellement une butée pour ledit ressort de rappel (8).

13. Capteur selon une quelconque des revendications 1 à 12 dans lequel ledit signal primaire relatif à une position donnée de ladite source (41) mobile par rapport audit moyen de réception (50) fixe, correspond à une mesure d'une grandeur électrique d'un circuit choisie parmi : résistance, capacité, impédance.

14. Capteur selon une quelconque des revendications 1 à 13 dans lequel ledit signal électrique S est un signal linéaire S_{L}, ledit signal linéaire S_{L} étant éventuellement obtenu par traitement dudit signal électrique S grâce à un moyen électronique ou grâce à un étalonnage, de manière à ce que le rapport ΔS_{L}/ΔL soit constant pour toute variation ΔS_{L} du signal S résultant d'une variation ΔL de ladite course de ladite pièce.

15. Capteur selon une quelconque des revendications 1 à 14 dans lequel ladite partie fixe (5) est solidarisée audit bâti (3) grâce à un support intermédiaire (9).

16. Utilisation d'un capteur selon une quelconque des revendications 1 à 15 dans des dispositifs ou équipements de véhicules automobiles, par exemple dans des dispositifs de freinage ou des dispositifs de freinage assisté.

17. Utilisation selon la revendication 16 dans laquelle ladite pièce (2) est un piston (2') et dans laquelle ledit bâti (3) est un maître-cylindre et/ou un servomoteur pneumatique d'assistance au freinage (3'), de manière à détecter le déplacement axial dudit piston (2') dans ledit maître-cylindre et/ou ledit servomoteur pneumatique d'assistance au freinage (3').
